# EUROPEAN PATENT SPECIFICATION

(11) **EP 0 655 111 B1**
(45) Date of publication and mention of the grant of the patent: **26.06.1996**
(21) Application number: 93917779.6
(22) Date of filing: 10.08.1993
(51) Int. Cl.: F16F 7/14, F16F 15/00, D06F 37/20

(54) **ELASTIC ANTI-IMPACT AND ANTI-VIBRATION METAL CABLE DEVICE FOR SUPPORTING A ROTARY UNIT**
ELASTISCHE KABELSTÜTZE FÜR STOSS- UND VIBRATIONSSCHUTZ VON ROTIERENDEN EINHEITEN
DISPOSITIF ELASTIQUE ANTICHOC ET ANTIVIBRATOIRE A CABLES METALLIQUES POUR SUPPORTER UNE UNITE ROTATIVE

(30) Priority: 20.08.1992 IT MI920787 U
(43) Date of publication of application: 31.05.1995
(73) Proprietor: CAMOSSI, Carlo, I-28024 Gozzano (IT)
(72) Inventor: CAMOSSI, Carlo, I-28024 Gozzano (IT)
(74) Representative: Fusina, Gerolamo
(86) International application number: EP9302138
(87) International publication number: WO9404843

(56) References cited:
- EP-A- 0 553 633
- FR-A- 1 560 072
- US-A- 2 873 109
- MACHINE DESIGN 8 August 1957, pages 99 - 100 R.G. HARTENSTEIN ET AL 'CABLE VIBRATION MOUNTS'

## Description

This invention relates to an elastic anti-impact and anti-vibration metal cable device for supporting a rotary unit. The term "rotary unit" signifies a unit forming part of a household electrical appliance or the like, such as a tub plus drum of a washing machine, dishwasher or the like, to which the relative electric motor is connected for rotation, this also being in a suspended state.

In this type of known household electrical appliance the rotary unit, or the drum tub, is suspended on four springs and is retained on the appliance base by two or more stabilizer elements, for example of piston type.

In a washing machine for example, during the rotation of the drum contained in the tub the stabilizer elements brake the oscillations generated not only by the rotary movement of the drum but also, and in particular, by the vibrations determined by the variations undergone by the weight contained in the drum.

It must also be considered that in such an appliance the passage from the wash stage to the spinning stage is particularly critical. This is because a very slow rotation state passes to a very fast rotation state with consequent creation of large-amplitude vibrations, with considerable jolting. This situation is also due to the fact that the masses are not distributed uniformly immediately and indeed can remain eccentric, in particular with a drum having a low weight of about 500-700 g when unloaded.

These vibrations are currently reduced to a large extent by positioning inertial blocks of various materials such as concrete, cement, cast iron etc. on top of and to the side of the tub. These blocks usually weigh about 20-25 kg to increase the stability of the unit formed by the tub, motor and drum, so eliminating or at least limiting the amplitude of the vibrations along the three cartesian axes.

The stresses induced in the rotary unit vary because of the eccentricity of the weights treated in the unit and also on the basis of the drum speed which, during the spinning stage, can reach 500-1200 rpm according to the type of washing machine. It should also be noted that for such a type of household electrical appliance provided with a rotary unit the critical speed is about 450-500 rpm with an internal weight of about 600 g. This occurs during passage from a low speed such as the wash speed to a high speed such as the spinning speed, as the masses present in the drum are not well distributed.

In an attempt to solve this problem, some types of washing machine have been provided with electronic systems which during the transfert state adjust the position of the masses to prevent the said vibration.

Besides being particularly complicated and costly, these systems are unable to completely solve the aforesaid problems. In MACHINE DESIGN, 8.8.1957, pages 99-100, R.G. Hartenstein et al "Cable Vibration. Mounts" is disclosed a device according to the preamble of claim 1.

An object of the present invention is to provide a device for supporting a rotary unit of a household electrical appliance by which vibrations and impacts are eliminated in every stage of its operation.

A further object is to provide an easily applied, low-cost support device.

These objects are attained according to the present invention by an elastic anti-impact and anti-vibration metal cable device according to claim 1.

Characteristics and advantages of a device according to the present invention will be more apparent from the description given hereinafter with reference to the accompanying schematic drawings, in which:
Figure 1 is a partly sectional schematic elevational view of a washing machine provided with a support device according to the present invention; and

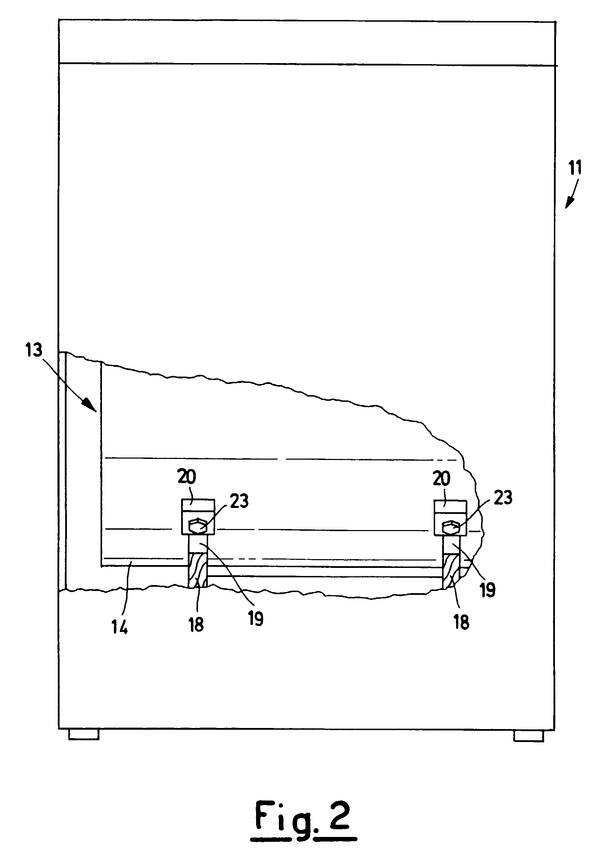

Figure 2 is a partly cut-away side view of the washing machine of Figure 1.

The figures show a washing machine 11 with a rotary unit 13 connected to its base structure 12 by an elastic support device according to the invention.

The rotary unit 13 comprises a tub 14 containing a drum 15 rotated by an underlying motor 16 via a relative transmission 17.

In the example, the support device comprises four metal cables 18, the ends of which are locked within terminal elements 19, for example having a ring-shaped end.

The terminal elements 19 can be inserted into U blocks or U-shaped elements 20, the sides of which comprise two mutually aligned holes 21, 22. The blocks 20 are fixed respectively to the tub 14 and to the base structure 12 along the side provided with the threaded hole 22, for example by welding.

The four metal cables are fixed by inserting relative screws 23 through the hole 21, through the ring-shaped end of the terminal element 19 and into the threaded hole 22.

The four metal cables 18 are arranged in pairs of two curved to C-shape to form semi-circumferences, the bows of which face each other.

The diameters joining the locked ends of the metal cables are arranged so that they converge towards the centre of gravity of the rotary unit 13 and are inclined at an angle β of about 45° to the horizontal base.

The arrangement formed by these metal cables enables the springs and stabilizer elements provided with rotary units of known type to be dispensed with. In this respect, the characteristics of the metal cable derive from the relative slippage between its individual constituent wires and strands when it is subjected to bending, shear and torsional stresses. This is because the deformation movement is braked along the slippage region by the effect of the friction between the individual wires or strands, ie for equal frequency the amplitude of the resultant vibration is considerably reduced.

The device of the present invention therefore achieves the effects deriving from the presence of springs and dampers in the household electrical appliances of the prior art.

It should be noted that there does not necessarily have to be four metal cable segments 18, but there must be at least two. In this latter case a spring or retention stop must be provided to suitably prevent oscillation of the rotary unit 13 perpendicular to the plane containing the cable segments. The tub 14 must rest on the metal segments so that they work under compression-flexure.

The diameter, length and number of strands and wires of the metal cables illustrated in the embodiment of the device can vary according to requirements based on the size and weight of the rotary unit 13. In addition, the radius of curvature depends on the cable diameter and its segment length.

In particular the ends of the metal cable 18, individually curved and locked in any manner to define a ring, are preferably aligned so that they are positioned on the same axis.

For optimum operability of the device, the metal cable segments fixed to the tub 14 must be positioned as close as possible to the plane containing the centre of gravity of the system. The present invention therefore provides a metal cable device for supporting or suspending a rotary unit in which the cable segments operate both as springs and as dampers, as stated.

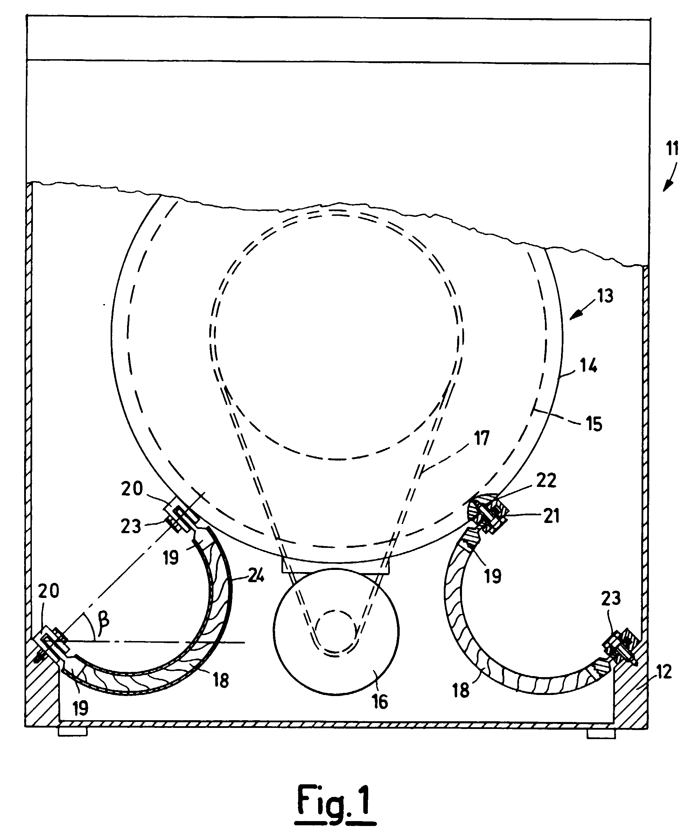

The metal cable can generally be of stainless steel, but alternatively can be a simple steel cable protected by a plastics sheath, indicated schematically by 24 in Figure 1, to prevent degradation and/or rusting.

## Claims

1. An elastic anti-impact and anti-vibration metal cable device for supporting a rotary unit (13), in particular of a household electrical appliance, comprising said rotary unit (13) arranged freely floating with respect to a base structure (12) of said device, and at least one pair of curved metal cables (18) positioned between said base structure (12) and said rotary unit (13), the ends of said at Least one pair of metal cables (18) being releasably mounted to said base structure (12) and to said rotary unit (13) by U-shaped elements (20), characterised in that said ends of said at least one pair of metal cables (18) are ring-shaped, and each U-shaped element (20) comprises two mutually aligned holes (21, 22), wherein each U-shaped element (20) engages one of the ring shaped end (19) of each of said cables (18) such that said two mutually aligned holes (21, 22) of the U-shaped element (20) are essentially in alignment with the hole formed by the ring-shaped end (19) of each of said cables (18) and a screw connection is provided between said base structure (12) and the rotary unit (13), respectively, by the extension of the screw connection through said holes (21, 22) and said hole of the ring-shaped end (19) of each of said cables (18).

2. An elastic device as claimed in claim 1, characterised in that said at least one pair of metal cables (18) is curved to C-shape.

3. An elastic device as claimed in claim 1, characterised in that each metal cable (18) of said at least one pair of metal cables (18) is positioned with its bow facing the bow of the other.

4. An elastic device as claimed in claim 1, characterised in that the diameters joining said connectable ends of said metal cables (18) converge towards the centre of gravity of the rotary unit (13).

5. An elastic device as claimed in claim 1, characterised in that the diameters joining said connectable rnds of said metal cables (18) are inclined by an angle (β) of about 45° to the horizontal.

6. An elastic device as claimed in claim 1, characterised in that at least one of said holes (22) of said U-shaped elements (20) comprising two aligned holes (21, 22) is threaded.

7. An elastic device as claimed in claim 1, characterised in that each metal cable (18) is inserted in a plastics sheath (24).

## Patentansprüche

1. Elastische Antistoß- und Antivibrations-Metallkabeleinrichtung zum Halten einer Dreheinheit (13), insbesondere von einem elektrischen Haushaltsgerät, umfassend die Dreheinheit (13), freischwimmend mit Bezug auf eine Basisstruktur (12) der Einrichtung angeordnet und wenigstens ein Paar von gekrümmten Metallkabeln (18), die zwischen der Basisstruktur (12) und der Dreheinheit (13) positioniert sind, wobei die Enden des wenigstens einen Paars von Metallkabeln (18) lösbar an der Basisstruktur (12) und der Dreheinheit (13) mittels U-förmiger Elemente (20) angebracht sind, dadurch **gekennzeichnet**, daß die Enden des wenigstens einen Paars von Metallkabeln (18) ringförmig sind, und jedes U-förmige Element (20) zwei gegenseitig fluchtende Löcher (21, 22) umfaßt, worin jedes U-förmige Element (20) mit einem der ringförmigen Enden (19) von jedem der Kabel (18) derart in Eingriff ist, daß die beiden gegenseitig fluchtenden Löcher (21, 22) des U-förmigen Elements (20) im wesentlichen in Fluchtung mit dem Loch sind, welches von dem ringförmigen Ende (19) von jedem der Kabel (18) gebildet ist, und eine Schraubenverbindung zwischen der Basisstruktur (12) bzw. der Dreheinheit (13) mittels der Erstreckung der Schraubenverbindung durch die genannten Löcher (21, 22) und das Loch des ringförmigen Endes (19) von jedem der Kabel (18) vorgesehen ist.

2. Elastische Einrichtung nach Anspruch 1, dadurch **gekennzeichnet,** daß das wenigstens eine Paar von Metallkabeln (18) zu einer C-Form gekrümmt ist.

3. Elastische Einrichtung nach Anspruch 1, dadurch **gekennzeichnet**, daß jedes Metallkabel (18) des wenigstens einen Paars von Metallkabeln (18) mit seinem Bogen dem Bogen des anderen zugewandt positioniert ist.

4. Elastische Einrichtung nach Anspruch 1, dadurch **gekennzeichnet,** daß die Durchmesser, welche die verbindbaren Enden der Metallkabel (18) verbinden, nach dem Schwerpunkt der Dreheinheit (13) zu konvergieren.

5. Elastische Einrichtung nach Anspruch 1, dadurch **gekennzeichnet**, daß die Durchmesser, welche die verbindbaren Enden der Metallkabel (18) verbinden, um einen Winkel (β) von etwa 45° zur Horizontalen geneigt sind.

6. Elastische Einrichtung nach Anspruch 1, dadurch **gekennzeichnet**, daß wenigstens eines der Löcher (22) der U-förmigen Elemente (20), die zwei fluchtende Löcher (21, 22) umfassen, mit Gewinde versehen ist.

7. Elastische Einrichtung nach Anspruch 1, dadurch **gekennzeichnet,** daß jedes Metallkabel (18) in eine Kunststoffhülle (24) eingefügt ist.

## Revendications

1. Dispositif élastique antichocs et anti-vibrations pour câbles métalliques, destiné à soutenir un unité rotative (13), en particulier d'un équipement électrique ménager, comprenant ladite unité rotative (13) flottant librement par rapport à une structure de base (12) dudit dispositif, et au moins une paire de câbles métalliques incurvés (18) placée entre ladite structure de base (12) et ladite unité rotative (13), les extrémités de ladite paire de câbles métalliques (18), au nombre d'au moins une, étant montées amoviblement à ladite structure de base (12) et à ladite unité rotative (13) par des éléments en forme de U (20), caractérisé en ce que lesdites extrémités de ladite paire de câbles métalliques (18) au nombre d'au moins une sont de forme annulaire, et en ce que chaque élément en U (20) comprend deux trous mutuellement alignés (21, 22), dans lequel chaque élément en U (20) se met en prise avec l'une des extrémités de forme annulaire (19) de chacun desdits câbles (18), de sorte que lesdits trous mutuellement alignés (21, 22) de l'élément en U (20) sont essentiellement alignés avec le trou formé par l'extrémité annulaire (19) de chacun desdits câbles (18), et en ce qu'une liaison vissée est prévue entre ladite structure de base (12) et l'unité rotative (13), respectivement, par l'extension de la liaison vissée à travers lesdits trous (21, 22) et ledit trou de l'extrémité annulaire (19) de chacun desdits câbles (18).

2. Dispositif élastique selon la revendication 1, caractérisé en ce que ladite paire de câbles métalliques (18) au nombre d'au moins une est incurvée en forme de C.

3. Dispositif élastique selon la revendication 1, caractérisé en ce que chaque câble métallique (18) de ladite paire de câbles métalliques (18) au nombre d'au moins une est placé avec sa courbure tournée vers la courbure de l'autre.

4. Dispositif élastique selon la revendication 1, caractérisé en ce que les diamètres joignant lesdites extrémités de connexion desdits câbles métalliques (18) convergent en direction du centre de gravité de l'unité rotative (13).

5. Dispositif élastique selon la revendication 1, caractérisé en ce que les diamètres joignant lesdites extrémités de connexion desdits câbles métalliques (18) sont inclinés d'un angle (b) d'environ 45° par rapport à l'horizontale.

6. Dispositif élastique selon la revendication 1, caractérisé en ce que au moins l'un desdits trous (22) desdits éléments en U (20) comprenant deux trous alignés (21, 22) est fileté.

7. Dispositif élastique selon la revendication 1, caractérisé en ce que chaque câble métallique (18) est inséré dans une gaine plastique (24).
